# EUROPEAN PATENT APPLICATION

(11) **EP 4 733 957 A1**
(43) Date of publication of application: **29.04.2026**
(21) Application number: 24208924.1
(22) Date of filing: 25.10.2024
(51) Int. Cl.: G06F 16/906

(54) **DOCUMENT CLASSIFICATION**

(71) Applicant: Sage Global Services Limited, Newcastle upon Tyne NE28 9EJ (GB)
(72) Inventor: GANI, Mahbub, London (GB)
(74) Representative: Definition IP Limited

(57) **Abstract**

A computer implemented system for predicting a property or classification associated with document data. The system comprises: a data extraction module configured to receive input document data and extract from the input document data a plurality of data sets, each data set comprising data of one of a plurality of data types; a plurality of processing pathways, each processing pathway configured to process one of the plurality of data sets to generate a vector output representative of the data set processed by the processing pathway; a vector concatenation layer configured to concatenate the vector outputs of each processing pathway to generate a concatenated vector, and a plurality of predictions heads, each prediction head configured to process the concatenated vector to generate a prediction variable indicative of a property or classification predicted to be associated with the input document data.

## Description

### Technical Field

The present invention relates to techniques for predicting a property or classification associated with document data.

### Background

Advances in machine learning and artificial intelligence are increasingly being used to automate tasks in various settings across various sectors.

In finance and accounting, this includes automating conventionally time-consuming tasks, such as invoice processing, expense management, financial reporting, and tax compliance.

Often, to automate such tasks, it is necessary to classify various aspects of incoming accounts payable (AP) documents so that they can be correctly allocated and assigned to the relevant automated work stream. For example, for invoice processing, invoice documents may typically need to be classified by currency, vendor, GL code, tax code and so on.

In typical automation scenarios, specialised models are trained to perform each separate classification task. However, as well requiring multiple models be maintained, this approach necessitates training and deploying a new model every time a new classification type required, and then integrating the new model into the automation flow.

Thus, as task automation is extended, it is typically necessary to continually develop and deploy new classification models. However, maintaining an increasing number of models is resource-intensive both in terms of developer time and use of computing resources.

### Summary of the Invention

In accordance with a first aspect of the invention, there is provided a computer implemented system for predicting a property or classification associated with document data. The system comprises: a data extraction module configured to receive input document data and extract from the input document data a plurality of data sets, each data set comprising data of one of a plurality of data types; a plurality of processing pathways, each processing pathway configured to process one of the plurality of data sets to generate a vector output representative of the data set processed by the processing pathway; a vector concatenation layer configured to concatenate the vector outputs of each processing pathway to generate a concatenated vector, and a plurality of predictions heads, each prediction head configured to process the concatenated vector to generate a prediction variable indicative of a property or classification predicted to be associated with the input document data.

Optionally, the system further comprises a feature database comprising a plurality of document features, a feature embedding layer, a similarity computing function and a further prediction head.

The feature embedding layer is configured to: generate a vector embedding for each document feature stored in the feature database. The similarity computing function is configured to: compare each feature embedding with the concatenated vector generated by the vector concatenation layer to generate similarity data indicative of a degree of similarity between the concatenated vector and each feature embedding, and communicate the similarity data to a further prediction head, wherein the further prediction head is configured to generate a further predicted classification variable indicative of a further property of the input document data using the similarity data.

Optionally, the feature embedding layer is configured to generate a vector embedding for each document feature stored in the feature database in a latent embedding vector space corresponding to a vector space of the concatenated vector.

Optionally, the further prediction head is configured to generate a further predicted classification variable indicative of a further property of the input document data using the similarity data and the concatenated vector.

Optionally, the further predicted classification is a general ledger code and the plurality of document features are words or phrases, each of which is indicative of a specific GL code.

Optionally, at least one of the plurality of data types extracted by the data extraction module comprises a first type of text data, and the processing pathway configured to process the data set comprising text of the first type of text data comprises: an embedding layer configured to generate an embedding of the data set comprising the first type of text data, an LSTM layer configured to process the embedding of the data to generate a sequence of hidden states, and a maxpool and attention layer configured to convert the sequence of hidden states into a vector output representative of the data set comprising the first type of text data.

Optionally, the LSTM layer comprises a plurality of multiple bi-directional LSTM layers.

Optionally, the plurality of data types extracted by the data extraction module comprises numerical data, and the processing pathway configured to process the data set comprising the numerical data comprises a batch normalisation layer configured to apply a normalisation function to standardise the distribution of the numerical data to generate a vector output representative of the data set comprising numerical data.

Optionally, the data extraction module is configured to tokenise the plurality of data sets and input a corresponding tokenised data set into each of the plurality of processing pathways.

Optionally, the input document data comprises data associated with an accounts payable document.

Optionally, the predicted classification variables indicative of a property of the input document data generated by the prediction heads comprise at least one of a vendor identifier; a currency prediction, a tax code prediction and a general ledger code prediction.

Optionally, the accounts payable document is an invoice document.

In accordance with a second aspect of the invention, there is provided a computer implemented method of predicting a property or classification associated with document data, said method comprising: receiving input document data; extracting from the input document data a plurality of data sets, each data set comprising data of one of a plurality of data types; processing each of the plurality of data sets by one of a plurality of processing pathways, each processing pathway configured to generate a vector output representative of the data set processed by that processing pathway; concatenating the vector outputs of each processing pathway to generate a concatenated vector, and processing the concatenated vector by a plurality of predictions heads to generate a plurality of prediction variables, each prediction variable indicative of a property or classification predicted to be associated with the input document data.

Optionally, the method further comprises comparing a plurality of feature embeddings with the concatenated vector generated by the vector concatenation layer to generate similarity data indicative of a degree of similarity between the concatenated vector and each feature embedding, each feature embedding corresponding to a vector embedding of one of a plurality of document features; communicating the similarity data to a further prediction head, and generating by the further prediction head a further predicted classification variable indicative of a further property of the input document data using the similarity data.

Optionally, each feature embedding is in a latent embedding vector space corresponding to a vector space of the concatenated vector.

Optionally, the method further comprises generating, by the further prediction head, a further predicted classification variable indicative of a further property of the input document data using the similarity data and the concatenated vector.

Optionally, the further predicted classification is a general ledger code and the plurality of document features are words or phrases, each of which is indicative of a specific GL code.

Optionally, at least one of the plurality of data types extracted by the data extraction module comprises a first type of text data, and processing, by a processing pathway, the data set comprising text of the first type of text data comprises: generating, by an embedding layer, an embedding of the data set comprising the first type of text data, processing the embedding of the data, by an LSTM layer to generate a sequence of hidden states, and converting the sequence of hidden states into a vector output representative of the data set comprising the first type of text data by a maxpool and attention layer configured.

Optionally, the LSTM layer comprises a plurality of multiple bi-directional LSTM layers.

Optionally, the plurality of data types comprises numerical data, and processing the data set comprising the numerical data comprises a batch normalisation layer comprises applying a normalisation function to standardise the distribution of the numerical data to generate a vector output representative of the data set comprising numerical data.

Optionally, the method further comprises tokenising the plurality of data sets into a plurality of corresponding tokenised data sets before processing by the plurality of processing pathways.

Optionally, the input document data comprises data associated with an accounts payable document.

Optionally, the predicted classification variables indicative of a property of the input document data generated by the prediction heads comprise at least one of a vendor identifier; a currency prediction, a tax code prediction and a general ledger code prediction.

Optionally, the accounts payable document is an invoice document.

In accordance with embodiments of the invention, a classification architecture is provided which enables multiple classification tasks to be performed simultaneously on a document. This is based on processing, in parallel, various data sets extracted from the document, each data set relating to a different type of data (for example text data, numerical data, categorical data, and so on). Each of these feature sets is then encoded using a different processing pathway to generate an output vector, and all the output vectors are concatenated into a single concatenated vector which is independently processed by a number of prediction heads, each prediction head used for a separate classification task. Specifically, each prediction head is configured to generate a prediction variable indicative of a property or classification predicted to be associated with the data.

As well as being highly efficient because a single model can be used to make multiple predictions, the architecture is particularly useful in settings where it is often necessary to add classification tasks relating to the same underlying data (such as in AP document processing) because to add an additional classification, it is simply a case of a adding a new prediction head. Moreover, the model can be readily adapted to process new sets of feature types by simply adding new processing pathways to extend the concatenated vector input to the prediction heads.

Another advantage is improved resilience to overfitting because the same concatenated vector is used as input for each prediction head. Consequently, each prediction head does not rely on separate representations for each classification task, which reduces the risk of overfitting to specific features or labels. Instead, commonalities and dependencies among the different feature types and classification tasks are incorporated into the input of each prediction head, resulting in more robust and generalisable predictions.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a simplified schematic diagram depicting an example of a system for classifying document in accordance with certain examples of the invention;
Figure 2 provides an example arrangement of a sequence of LSTM layers for a first processing pathway and second processing pathway of the system shown in Figure 1;
Figure 3 provides a simplified schematic diagram of a system for classifying invoice document data in accordance with certain examples of the invention;
Figure 4 provides a simplified schematic diagram of system, corresponding to the system shown in Figure 3, with the addition of a GL code representation layer;
Figure 5 provides a simplified schematic diagram depicting an illustrative implementation of a system arranged in accordance with certain embodiments of the invention, and
Figure 6 provides a flow diagram depicting a computer-implemented process in accordance with embodiments of the invention.

### Detailed Description

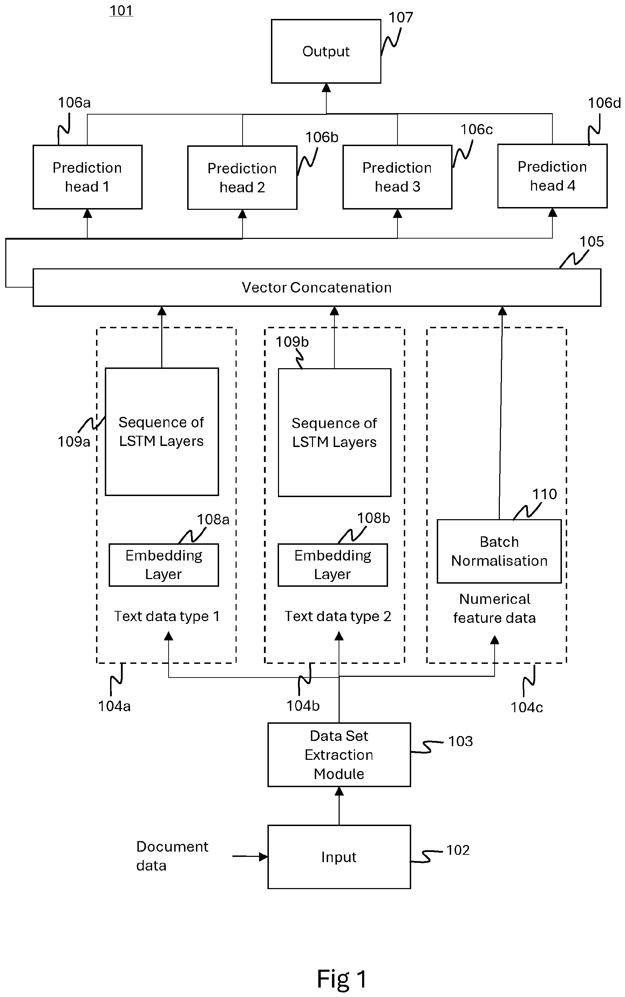

Figure 1 provides a simplified schematic diagram depicting an example of a system 101 for predicting a property or classification associated with document data in accordance with certain examples of the invention.

The system 101 comprises an input interface 102, configured to receive input document data extracted from a document, and which is connected to a data set extraction module 103. The data set extraction module 103 is connected to a plurality of processing pathways comprising, in this instance, a first processing pathway 104a, a second processing pathway 104b and a third processing pathway 104c. Each processing pathway is connected to a vector concatenation layer 105 which in turn is connected to a plurality of prediction heads, which in this instance comprises a first prediction head 106a, a second prediction head 106b, a third prediction head 106c, and a fourth prediction head 106d. Each prediction head is connected to an output interface 107.

Document data extracted from a document and input to the input interface 102 typically comprises data of different data types. For example, where the document data is extracted from an invoice document, the document data will typically comprise at least text data (potentially of different types) and numerical data.

In use, the data set extraction module 103 is configured to process the input document data to extract a plurality of data sets, where each different data set comprises data of a particular type. In the example shown in Figure 1, the data set extraction module 103 is configured to extract a first data set comprising text data of a first type ("Text data type 1"), a second data set comprising text data of a second type ("Text data type 2"), and a third data set comprising numerical data ("Numerical feature data").

The first type of text data and the second type of text data are typically alphanumeric text data, meaning that they consist of letters and numbers. For example, the text data could be words or phrases extracted from the input document data, such as the name of a company, the date of an invoice, or the description of a product or service. The second type of text data might be a subset of the first type of text data, for example, the second type of text data might be text data extracted from a specific field of an input document data, such as the line-item text data from an invoice. Such line-item text data may contain information about the items or services that are being billed in the invoice, including quantity and description.

The numerical data typically relates specifically to numerical feature data that are extracted from the document data. Numerical feature data are typically data that describe some quantitative aspect of the document, such as amounts, totals, quantities, rates, percentages, or dates. These data are typically expressed using numeric characters, e.g. 123456789 etc. For example, on an invoice document, the numerical feature data might include the invoice number, the invoice date, the due date, the subtotal, the tax, the discount, and the total amount.

Once the data sets are extracted, typically, the data set extraction module 103 is configured to apply some preprocessing steps, such as tokenisation and normalisation, and feature extraction. Tokenisation is the process of splitting the document data into smaller units, such as words, characters, or n-grams. Normalisation is the process of standardising the document data, such as converting all letters to lowercase, removing punctuation, or lemmatising words. The output of the data set extraction module 103 is typically a set of data set tokens representing the data sets of different types, which are then passed to the respective processing pathways 104a, 104b, 104cfor further processing.

Each of the processing pathways 104a, 104b, 104c is configured to process one of the plurality of tokenised data sets to generate a vector output representative of that data set. In this instance, the first processing pathway 104a is configured to process text data of a first type, the second processing pathway 104b is configured to process text data of the second type and the third processing pathway 104c is configured to process numerical data.

In this example, to generate a vector representation of the text data of the first type, the first processing pathway 104a comprises an embedding layer 108a connected to a sequence of LSTM layers 109a, the output of which is connected to the vector concatenation layer 105. Similarly, the second processing pathway 104b comprises an embedding layer 108b connected to a sequence of LSTM layers 109b, the output of which is also connected to the vector concatenation layer 105.

To generate a vector representation of the numerical data, the third processing pathway 104c comprises a batch normalisation layer 110 the output of which is connected to the vector concatenation layer 105. To generate a vector representation of the category data, the fourth processing pathway 104d comprises an embedding layer 111, the output of which is directly connected to the vector concatenation layer 105.

The vector representation output from each of the plurality of processing pathways is input to the vector concatenation layer 105 which concatenates each vector representation to generate a concatenated vector. Specifically, the vector concatenation layer 105 performs a vector joining operation in which the vector representations generated by each of the processing pathways are joined together to form a single vector.

By concatenating the vector representations from each pathway into a single concatenated vector, a unified representation of the document data is provided, whilst individual information of each data type is still preserved.

This concatenated vector is then separately input to each prediction head 106a, 106b, 106c, and 106d. The prediction heads 106a, 106b, 106c, and 106d are each configured to perform a separate prediction task for predicting a property or classification associated with the input document data. Specifically, each prediction head 106a, 106b, 106c, and 106d is configured to process the concatenated vector to generate a prediction variable which is indicative of a property or classification predicted to be associated with the input document data.

By providing such a concatenated vector as an input to all of the prediction heads, each prediction head generates a prediction variable with complete context from the representation of all of the available data types, even if that data type is not directly relevant to the prediction being made by that prediction head.

The purpose of each processing pathway is to create a vector representation of the data type that it is assigned to process, which captures the information and meaning of the data of that type from the document data. As will be understood, the layers optimised to achieve this will vary in dependence on the data type.

For example, as can be seen from Figure 1, to generate a vector representation of the text data of the first type, the first processing pathway 104a comprises an initial embedding layer 108a connected to a sequence of LSTM layers 109a. The embedding layer 108a generates an initial embedding of the tokenised text data of the first type received from the data set extraction module 103. This embedding is then passed through the sequence of LSTM layers 109a.

As the skilled person will understand, alternatively, other suitable types of layers could be used instead of LSTM layers to learn the sequence and contextual properties of the text data. For example, layers comprising neural network architecture that use self-attention mechanisms to capture relationships between all tokens in a sequence (allowing them to learn both local and global dependencies within the text), such as transformer layers, could be used.

A corresponding process is used to generate a vector representation of the text data of the second type using the embedding layer 108b and sequence of LSTM layers 109b of the second processing pathway 104b.

The text embeddings are passed through the sequence of LSTM layers to further refine the representation of the text data, and in particular to ensure that as much of the information and meaning of the text data is encoded in the vector representations output by the first processing pathway 104a and second processing pathway 104b.

As is known, the embedding layers 108a and 108b works by transforming the tokenised text data into a vector of numerical values that represents the semantic and syntactic features of the words. In some examples, the embedding layers are optimised for this task by starting with a conventional text embedding function, such as word2vec or GloVe, and then fine-tuning it for the specific classification tasks using appropriate training data. This way, the embedding layer can learn to encode the relevant information of the text data for the document classification system.

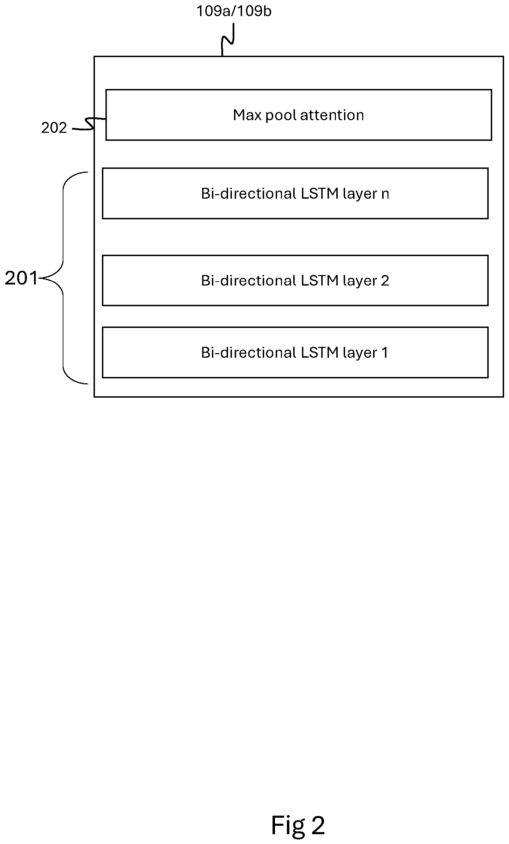

Figure 2 provides an example arrangement of the sequence of LSTM layers 109a for the first processing pathway 104a and sequence of LSTM layers 109b for the second processing pathway 104b.

As can be seen, the sequence of LSTM layers comprises a plurality of bi-directional LSTM layers 201 and a final max pool and attention layer 202.

The bi-directional LSTM layers 201 receive the embedding of the tokenised text data from the embedding layer and apply a recurrent neural network (RNN) function in both forward and backward directions. This allows the bi-directional LSTM layers 201 to capture both the past and future context of each word in the text data.

The output of the bi-directional LSTM layers 201 is a sequence of hidden states, one for each word in the text data. The max pool and attention layer 202 receives the sequence of hidden states and applies a pooling function and an attention mechanism to generate a vector representation of the text data. The pooling function reduces the dimensionality of the sequence of hidden states by taking the maximum value of each feature along the sequence. The attention mechanism assigns different weights to the pooled features based on their relevance to the classification tasks. The weighted features are then summed up to produce a vector representation of the text data. As discussed above, this vector representation is then input to the vector concatenation layer 105, where it is joined with the vector representations of the other data types to form a concatenated vector.

The bi-directional LSTM layers 201 can be trained in this context by using a supervised learning approach, where the system is provided with a set of labelled invoice documents as training data. The labels indicate the desired output for each document, such as the document type, the invoice number, the vendor name, or the payment due date. The system then learns to adjust the parameters of the bi-directional LSTM layers 201 to minimise the difference between the predicted output and the actual output for each document. The bi-directional LSTM layers 201 can benefit from this training process by learning to capture the relevant contextual information from the text data that can help to identify the correct labels for each document. For example, the bi-directional LSTM layers 201 can learn to recognise patterns or keywords in the text data that are indicative of certain document types, such as "invoice", "receipt", or "purchase order". Similarly, the bi-directional LSTM layers 201 can learn to extract the key information from the text data that corresponds to the desired fields, such as the invoice number, the vendor name, or the payment due date. By training the bi-directional LSTM layers 201 with labelled invoice documents, the system can improve its accuracy and performance for processing new invoice documents.

Returning to Figure 1, whereas the first processing pathway 104a and the second processing pathway 104b comprise an embedding layer and sequence of LSTM layers, the third processing pathway 104c (configured to generate a vector representation of the numerical data) comprises a batch normalisation layer 110.

The batch normalisation layer 110 is configured to receive the numerical data from the data set extraction module 103 and then apply a normalisation function to standardise the distribution of the numerical data.

In typical embodiments, this normalisation function adjusts the input data using predetermined stored statistics, to reduce scale variation among different features in the numerical data, which is particularly beneficial when processing diverse input types such as those found in invoice data. This normalised data is then converted into an appropriate vector format and the batch normalisation layer 110 outputs a normalised vector representation of the numerical data, which is then input to the vector processing layer 105.

This approach is particularly effective for processing invoice data, where different numerical fields (for example, total amounts, line-item costs, tax values) can vary widely in scale and distribution. The normalisation helps to bring these diverse inputs into a consistent range, facilitating more effective processing in subsequent layers of the model. By standardising the input in this manner, the system can more efficiently handle the varied numerical data typically present in invoices, preparing it for further analysis or prediction tasks in the following stages of the model.

Implementations of examples of the invention find particular application when processing document data associated with accounts payable (AP) type documents, such as invoice documents.

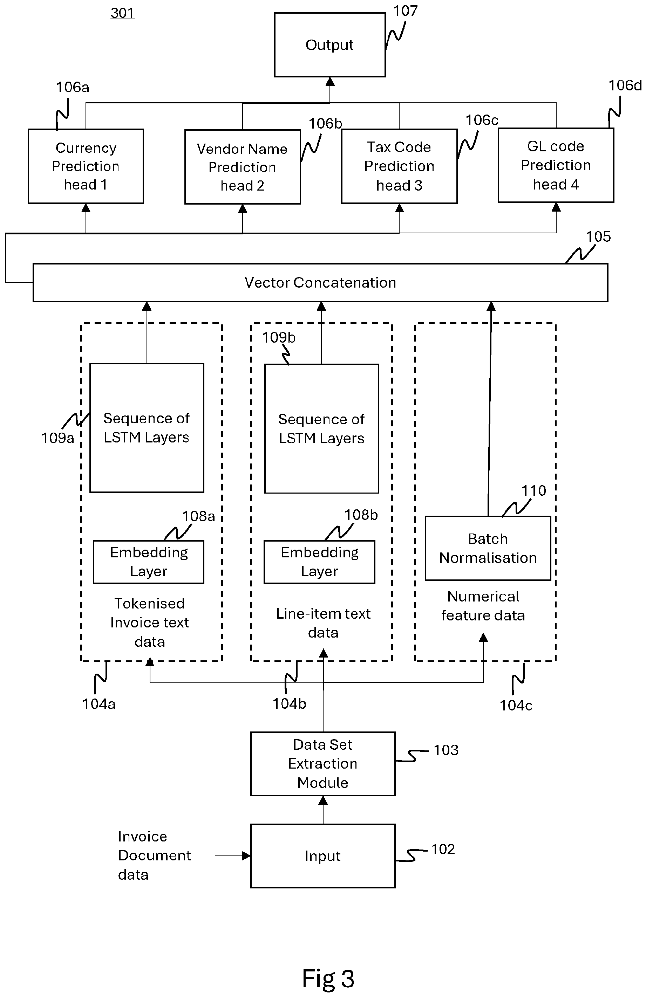

An example of such an implementation is shown in Figure 3.

Figure 3 provides a simplified schematic diagram of a system 301 for classifying invoice document data in accordance with certain examples of the invention.

The structure and components of the system 301 shown in Figure 3 correspond to those shown in Figure 1, therefore where appropriate, corresponding reference numerals are used.

Referring to Figure 3, the input interface 102 (provided, for example, by a suitable API data input endpoint) is adapted to receive invoice data from an invoice document. As the skilled person will understand, in the context of examples of the invention, the invoice documents from which such invoice data originates can include, but are not limited to, electronic files in formats such as email, PDF, Word documents, spreadsheets (e.g., Excel), XML, JSON, or a photo, scanned image, or other rendering of a physical invoice, such as JPEG or PNG formats.

The invoice data may be received by the input interface 102 in various formats, including structured data formats such as JSON, XML, or CSV files; semi-structured formats like PDF or image files (JPEG, PNG, TIFF) with optical character recognition (OCR) applied; or unstructured text data such as plain text files or email body content. This invoice data is then passed to the data set extraction module 103 which in this example is configured to extract from the invoice data: general invoice text data; line-item text data and numerical feature data.

The extracted general invoice text data typically relates to any textual data that might appear on an invoice, such as the vendor name, address, and contact details; the customer name, address, and contact details; the invoice number, date, and due date; the terms and conditions of payment; the tax information, purchase order references, and any other relevant metadata.

The extracted line-item text data typically relates to text data that appears in specific line-items of an invoice, for example descriptive text indicative of goods and/or services rendered, product codes or SKUs, quantity descriptions, and any additional notes or comments related to individual items to which the invoice relates.

The numerical feature data extracted from the invoice typically includes quantitative information such as individual item prices, quantities of items or services, subtotals for each line item, total invoice amount, tax amounts (e.g., sales tax, VAT), discounts or surcharges applied, payment amounts already made (in case of partial payments), and outstanding balance.

As described above, the data output from the data set extraction module 103 is typically in tokenised form. Accordingly, the data set extraction module 103 outputs tokenised invoice text data to the first processing pathway 104a; tokenised line-item text data to the second processing pathway 104b and tokenised numerical feature data to the third processing pathway 104c.

As can be seen from Figure 1, the first processing pathway 104a is configured to process the invoice text data and output a vector representation of the invoice text data; the second processing pathway 104b is configured to process the line-item data and output a vector representation of the line-item text data, and the third processing pathway 104c is configured to process the numerical feature data and output a vector representation of the numerical feature data.

These vector representations are then concatenated by the vector concatenation layer 105 to generate a concatenated vector which thereby provides a unified vector representation of the invoice document data including representations of the information and meaning found in the invoice text, line-item text and numerical features present in the input invoice document data.

This concatenated vector is then input to each of the prediction heads, and each prediction head is then configured to generate a prediction variable indicative of a property or classification predicted to be associated with the input document data.

In the example shown in Figure 3, the first prediction head 106a is configured to generate a currency prediction variable (e.g. a prediction of a currency in which amounts in the invoice are issued in, for example, US dollars, pounds sterling; Euros, and so on); the second prediction head 106b is configured to generate a vendor name prediction variable (e.g. a prediction of the identity of the vendor, that is the organisation or party from whom the invoice document originated); the third prediction head 106c is configured to generate a tax-code prediction variable (e.g. a prediction of the tax rate or code applicable to the invoice, for example, VAT, GST, or other sales taxes, based on the country or region of the vendor and the customer, and the fourth prediction head 106d is configured to generate GL code prediction variable (e.g. a prediction of the general ledger (GL) code applicable to the invoice, for example, a numerical or alphanumeric code that corresponds to a specific account or sub-account in an accounting system.

Once generated, these prediction variables are passed to the output interface 107 (provided for example by a suitable API data output endpoint).

As the skilled person will appreciate, the prediction heads can be implemented in any suitable manner to suit the specific requirements of classifying properties of the input document data. Each prediction head may consist of a machine learning model such as a neural network, a support vector machine, a decision tree or any other classification algorithm appropriate for the classification variable prediction task to which it is allocated. The prediction heads are trained to specialise in generate the prediction variables with which they are associated, for example, with reference to Figure 3, the first prediction head 106a is trained to predict a currency prediction variable from the concatenated vector generated by the vector concatenation layer 105, the second prediction head 106b is trained to predict a vendor name prediction variable from the concatenated vector generated by the vector concatenation layer 105, the third prediction head 106c is trained to predict a tax code prediction variable from the concatenated vector generated by the vector concatenation layer 105, and the fourth prediction head 106d is trained to predict a GL code prediction variable from the concatenated vector generated by the vector concatenation layer 105.

Certain types of features in document data from a document may be highly correlated to a specific prediction variable (and therefore highly significant to the correct prediction of that prediction variable), yet sparsely represented in the training data.

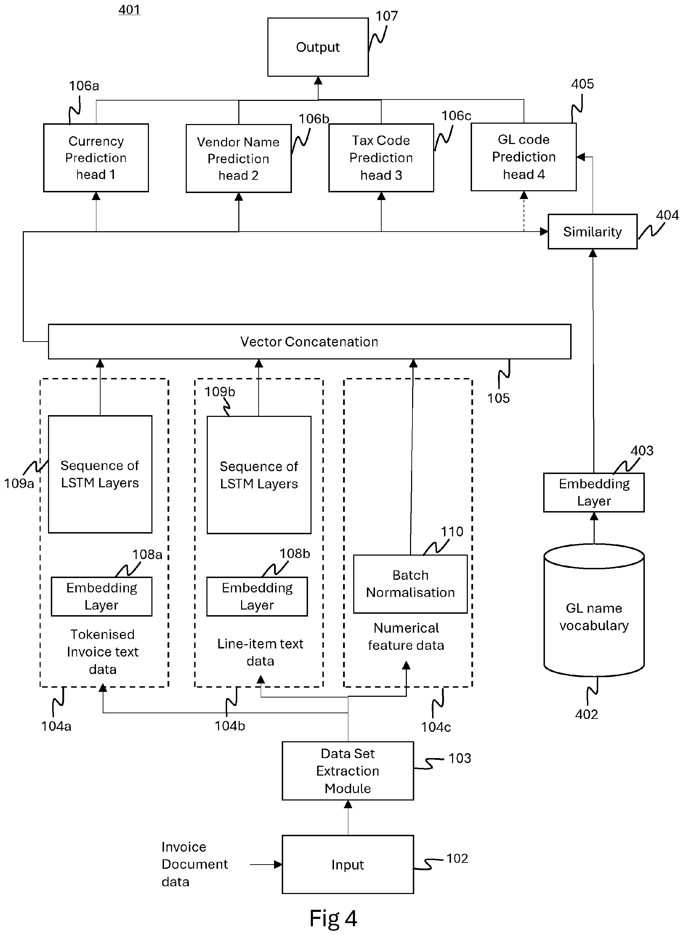

For example, the correct prediction of the GL code prediction variable generated by the fourth prediction head 106d in the example in Figure 4, may be highly sensitive to certain features from an invoice document, for example key words or phrases indicative of the GL code associated with a particular transaction. Examples might include short phrases or single words appearing in a line-item narrative such as "computing equipment" or "stationary" or "cost centre 123".

However, in typical invoice documents, such words or phrases may only appear very infrequently, or in some examples not at all. Consequently, such features will likely be sparsely represented in any corpus of invoice documents used for training.

Typically, sufficient training of the relevant prediction head can ensure that the presence of such sparsely represented features still lead to correct prediction of the prediction variable with high-reliability.

However, due to their scarcity in the training set, even with the context provided by the entire concatenated vector, the performance of any prediction head that relies significantly on this data will potentially be highly sensitive to small variations in the way these features are presented (for example due to miss-spellings or other informalities).

To mitigate this sparse-feature problem, certain embodiments of the invention comprise a specially defined sparse-feature embedding layer and a sparse-feature database.

The sparse-feature database has stored therein examples of sparsely represented features that highly correlate to particular prediction variables. In the context of AP documents, this can include words or phrases that might be present in an input invoice document which are highly indicative of the input invoice document being associated with a specific GL code.

The sparse-feature embedding layer is configured to generate vector embeddings for each of these features stored in the sparse-feature database.

In such embodiments, the system further comprises a similarity computing function which is configured to compare the concatenated vector produced by the vector concatenation layer 105 with each of the vector embeddings generated by the sparse-feature embedding layer and generate a similarity value.

To improve the accuracy of similarity computations performed by the similarity computing function, the vector embeddings generated by the sparse-feature embedding layer are expressed in a latent embedding space which corresponds with the vector space of the concatenated vector produced by the vector concatenation layer 105.

If the input document contains words or phrases which are slightly different but still similar (e.g. a misspelling) one of the words or phrases stored in the sparse-feature database, this will be identified by the comparisons performed by the similarity computing function. The output of the similarity computing function can then be input to the relevant prediction head and used by the prediction head (alone or in combination concatenated vector produced by the with the vector concatenation layer 105) to generate the prediction variable in question. Figure 4 provides depicts an embodiment which implements an example of this technique.

Figure 4 provides a simplified schematic diagram of system 401, corresponding to the system 301 as described with reference to Figure 3, with the addition of a sparse-feature database provided by a sparse-feature database 402 and a sparse-feature embedding layer 403 which is configured to generate embeddings in a latent embedding space that corresponds to the vector space in which the vector concatenation layer 105 generates the concatenated vector. The sparse-feature database 402 has stored thereon data items each indicative of words and phrases (features) that are strongly correlated with a particular GL code. The system 401 further comprises a similarity computing function 404 and an adapted fourth prediction head 405.

In use, a concatenated vector is generated by the vector concatenation layer 105 and which is input to the first prediction head 106a, second prediction head 106b and third prediction head 106c as described above. The sparse-feature embedding layer 403 is configured to generate an embedding for each of the data items stored in the sparse-feature database 402 and pass these embeddings to the similarity computing function 404.

The similarity computing function 404 receives the concatenated vector and compares it with each of the vector embeddings (which as noted above are in the same latent embedding space as the concatenated vector allowing a direct comparison) and generates a similarity value. As will be understood, for a given vector embedding, this similarity value is indicative of whether or not a word or phrase stored in the sparse-feature database 402 is present in the input invoice document data, even such a word or phrase is misspelled, partially incomplete or subject to some other similar form of error or informality.

The similarity computing function 404 is configured to pass the similarity values generated for each vector embedding generated by the sparse-feature embedding layer 403 to the adapted fourth prediction head 405. The adapted fourth prediction head 405 is configured to use these similarity values to predict the GL code associated with the input invoice document. As indicated by the broken line connecting the vector concatenation layer 105 to the adapted fourth prediction head 405 in Figure 4, this can be either based on the similarity values generated by the similarity computing function 404 alone, or based on a combination of the similarity values generated by the similarity computing function 404 and the concatenated vector generated by the vector concatenation layer 105.

As the skilled person will understand, the fourth prediction head 405 can be trained in keeping with training methods for prediction heads described above but also based on training data comprising similarity data of the type generated by the similarity computing function 404.

As the skilled person will understand, examples of the systems described above and depicted in Figures 1, 3 and 4, can be implemented in any suitable way using any suitable combination of computing hardware, data communication means, storage and software implementations. For example, the systems can comprise one or more servers, client devices, databases, network interfaces, processors, memory units, and software modules configured to execute the functions described herein. The software modules can be written in any programming language, such as Python, Java, C#, or C++, and can utilize any suitable frameworks, libraries, or APIs for natural language processing, deep learning, computer vision, or other tasks. The systems can also be integrated with any existing or future systems or applications that require document processing, analysis, or classification.

In addition, the neural network aspects of the invention, such as the embedding layers and the LSTM layers, can be stored and accessed in any suitable way. For example, the neural network models can be stored in a cloud-based service, a local server, a distributed file system, or a memory device. The neural network models can also be accessed by any authorized users or devices, such as web browsers, mobile applications, or desktop applications. The neural network models can be updated, trained, or modified as needed, depending on the data and the performance of the systems.

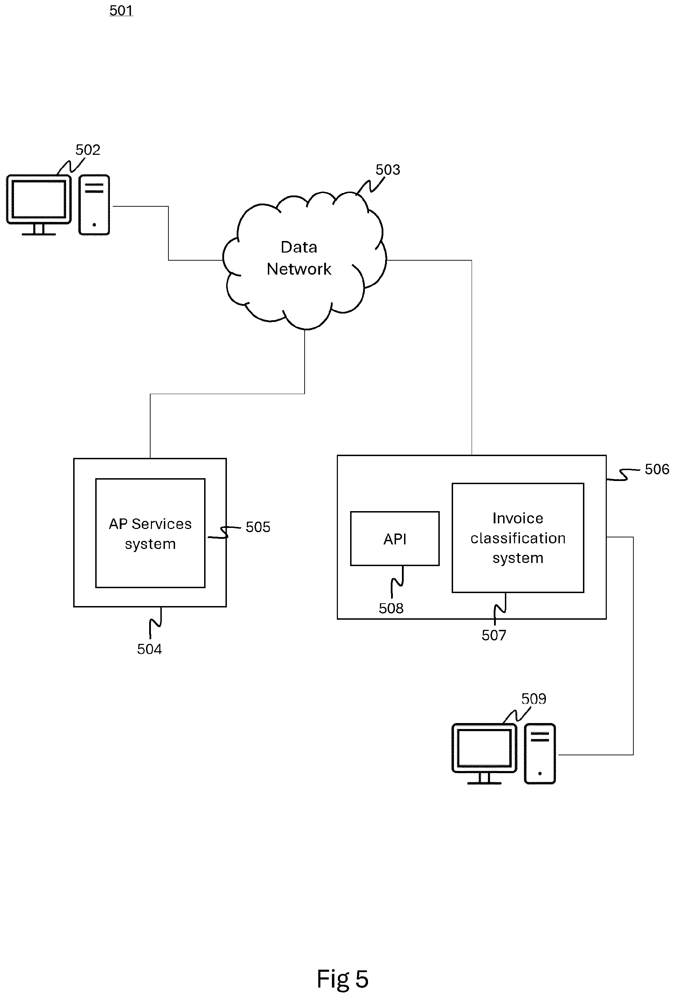

Figure 5 provides a simplified schematic diagram depicting an illustrative implementation of a system 501 arranged in accordance with certain embodiments of the invention.

The system comprises a user device 502 connected to a data network 503.

The system further comprises a first computing system 504 on which is running an accounts payable services system 505. The system 501 further comprises a second computing system 506 on which is running an invoice document classification system 507 of the type described with reference to Figure 3 or Figure 4, and an API 508.

The system 501 also includes an administrator computing device 509 connected to the second computing system 506. The administrator computing device 509 can be used to control, monitor, and configure the invoice document classification system 507 and the API 508.

Although Figure 5 only shows a single user device for clarity, as will be understood, in typical applications the accounts payable services system 505 is configured to provide the accounts payable services to multiple user devices that can access a suitable web interface provided by the accounts payable services system 505 via the data network 503.

The accounts payable services system 505 can be a software system configured to perform accounts payable related tasks, such as receiving, validating, approving, and paying invoices from suppliers or vendors. The accounts payable services system 505 can also generate reports, alerts, and insights related to the accounts payable process, such as cash flow analysis, payment status, duplicate invoices, and fraud detection. The user device 502 may access these services via a web interface provided by a web browser on the user device 502, which communicates with the first computing system 504 through the data network 503. The first computing system 504 and the accounts payable services system 505 can exchange data via the data network 503 using standard protocols, such as HTTP, HTTPS, FTP, or TCP/IP. The data exchanged can include invoice documents that are either scanned locally at the user device 502 or received from other sources, such as a messaging service or an email.

During operation of the accounts payable services system 505, it is typically necessary to classify aspects of a received invoice document, for example to identify a currency, vendor name, tax code or GL code associated with the invoice document.

To achieve this, the accounts payable services system 505 is configured to generate a classification request which is communicated to invoice document classification system 507 via the API 508 as an API call. The invoice document classification system 507 is configured to process this request as described above and generate an output including the relevant prediction variables.

This output is then passed back to the accounts payable services system 505 via the API 508 as an API response.

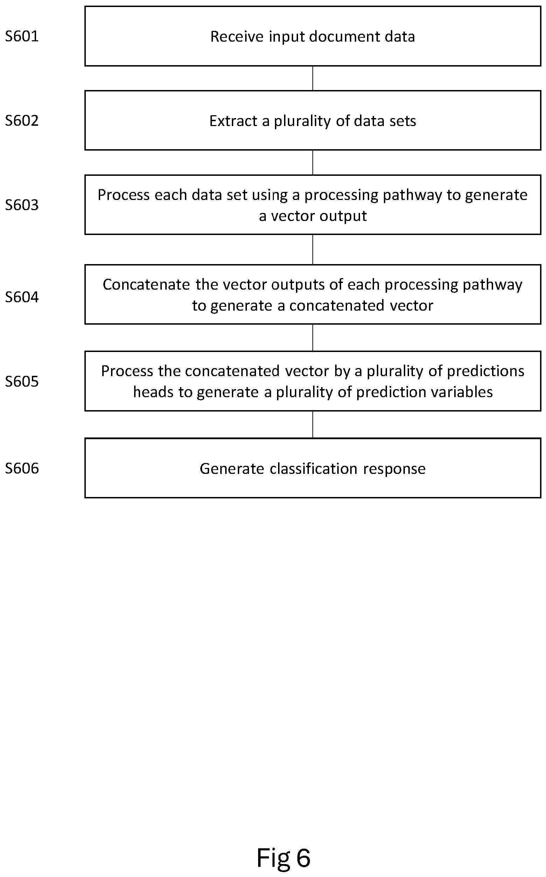

Figure 6 provides a flow diagram depicting a summary of the computer-implemented process undertaken by the system 501 shown in Figure 5.

At a first step S601, the invoice document classification system 507 receives input document data from the accounts payable services system 505 via the API 508.

At a second step S602, the data extraction module of the invoice document classification system 507 processes the input document data to extract a plurality of data sets, each containing data of one of a plurality of data types relevant to the invoice document classification system 507.

At a third step S603, each of the extracted data sets is routed through one of the plurality of processing pathways. These pathways process the data sets to generate vector outputs that represent the processed data sets.

At a fourth step S604, the vector concatenation layer takes the vector outputs from each processing pathway and concatenates them to generate a single, unified concatenated vector.

At a fifth step S605, the concatenated vector is then routed to a plurality of prediction heads. Each prediction head processes the concatenated vector to generate a prediction variable indicative of a property or classification associated with the input document data.

At a sixth step S606, the prediction variables are compiled into a classification response, which is then sent back through the API 508 to the accounts payable services system 505 as an API response.

Data is communicated via the data network 503 between the second computing system 506, which hosts the invoice document classification system 507 and the API 508, and the first computing system 504, which hosts the accounts payable services system 505. This allows the accounts payable services system 505 to send and receive API calls and responses to and from the invoice document classification system 507, with the prediction as the output.

The user device 502 can be any suitable device capable of accessing the data network 503 and communicating with the accounts payable services system 505. For example, the user device 502 can be a personal computer, a laptop, a tablet, a smartphone, a smartwatch, or a virtual reality device, such as a headset. The user device 502 can also be a standalone device or part of a group of networked computers, such as those associated with an organization, a company, a department, or a team. Some or all of these computers can have access to the accounts payable services system 505 via the data network 503, depending on the security and authorization settings of the system.

The second computing system 506 can be implemented in any suitable way that allows it to host the invoice document classification system 507 and the API 508 and communicate with the first computing system 504 via the data network 503. For example, the second computing system 506 can be a single server, a cluster of servers, a cloud computing platform, or a distributed network of computing devices. The second computing system 506 can also have different configurations depending on the scale and complexity of the invoice document classification system 507 and the API 508, such as the number of processors, memory units, storage units, and network interfaces.

The invoice document classification system 507, and the components thereof, can be manifested in any suitable way that allows it to perform the functions described above, such as receiving classification requests, processing invoice documents, generating prediction variables, and sending classification responses.

For example, the invoice document classification system 507 can be a standalone software system that is dedicated to invoice document classification, or it can be incorporated into another software system that provides additional functionality, such as an enterprise resource planning (ERP) system, a financial management system, or a document management system. Alternatively, the invoice document classification system 507 can be manifested by aspects of separate software systems that communicate with each other via the data network 503 or another network, such as a local area network (LAN) or a wide area network (WAN). In this case, different components of the invoice document classification system 507, such as the data set extraction module 103, processing pathways, vector concatenation layer 105, prediction heads, and where appropriate sparse-feature database 402, the sparse-feature embedding layer 403, and the similarity computing function 404, can be implemented on different physical or virtual computing devices or platforms that are configured to work together.

The operation of the invoice document classification system 507 can be controlled via a suitable interface hosted on the administrator computing device 509. This interface can allow users, such as administrators or developers, to add or modify prediction heads that are used to generate the prediction variables for the invoice documents. For example, a user can add a new prediction head for a new type of prediction variable, such as a payment term or a due date, or modify an existing prediction head. The interface can also allow users to extend or modify the set of prediction variables that are generated by the invoice document classification system 507, such as adding new currencies, vendors, tax codes, or GL codes, or modifying the existing ones.

The interface can also allow users to add or modify the processing pathways that are used to process the invoice documents and extract features for the prediction heads. For example, a user can add a new processing pathway for a new type of invoice document data, such as a different format, language, or layout, or modify an existing processing pathway to change its components. The interface can also allow users to bypass certain processing layers within the processing pathways, such as the sparse-feature embedding layer 403 or similarity computing function 404, if they are not needed or desired for a particular type of invoice document or classification variable.

It should be noted that although the embodiments described above have mainly been described in terms of systems configured to classify accounts payable related documents such as invoice documents, the techniques disclosed herein can be applied to generating prediction variables indicative of the properties or classification of other types of documents. For example, the systems and methods can be used to classify medical records, legal contracts, academic papers, news articles, or any other documents that contain structured or semi-structured data. The specific processing pathways and prediction heads can be adapted to suit the features and formats of the different types of documents and the classification variables of interest. Thus, the invention is not limited to the accounts payable domain and can be extended to any domain that involves predicting a property or classification associated with document data.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A computer implemented system for predicting a property or classification associated with document data, said system comprising:
a data extraction module configured to receive input document data and extract from the input document data a plurality of data sets, each data set comprising data of one of a plurality of data types;
a plurality of processing pathways, each processing pathway configured to process one of the plurality of data sets to generate a vector output representative of the data set processed by the processing pathway;
a vector concatenation layer configured to concatenate the vector outputs of each processing pathway to generate a concatenated vector, and
a plurality of predictions heads, each prediction head configured to process the concatenated vector to generate a prediction variable indicative of a property or classification predicted to be associated with the input document data.

2. A computer implemented system according to claim 1, further comprising a feature database comprising a plurality of document features, a feature embedding layer, a similarity computing function and a further prediction head, wherein
the feature embedding layer is configured to:
generate a vector embedding for each document feature stored in the feature database, and the similarity computing function is configured to:
compare each feature embedding with the concatenated vector generated by the vector concatenation layer to generate similarity data indicative of a degree of similarity between the concatenated vector and each feature embedding, and
communicate the similarity data to a further prediction head, wherein the further prediction head is configured to generate a further predicted classification variable indicative of a further property of the input document data using the similarity data.

3. A computer implemented system according to claim 2, wherein the feature embedding layer is configured to generate a vector embedding for each document feature stored in the feature database in a latent embedding vector space corresponding to a vector space of the concatenated vector.

4. A computer implemented system according to claim 2 or 3, wherein the further prediction head is configured to generate a further predicted classification variable indicative of a further property of the input document data using the similarity data and the concatenated vector.

5. A computer implemented system according to any of claims 2 to 4, wherein the further predicted classification is a general ledger code and the plurality of document features are words or phrases, each of which is indicative of a specific GL code.

6. A system according to claim 1, wherein at least one of the plurality of data types extracted by the data extraction module comprises a first type of text data, and the processing pathway configured to process the data set comprising text of the first type of text data comprises:
an embedding layer configured to generate an embedding of the data set comprising the first type of text data,
an LSTM layer configured to process the embedding of the data to generate a sequence of hidden states, and
a maxpool and attention layer configured to convert the sequence of hidden states into a vector output representative of the data set comprising the first type of text data.

7. A system according to claim 6, wherein the LSTM layer comprises a plurality of multiple bi-directional LSTM layers.

8. A system according to any previous claim, wherein the plurality of data types extracted by the data extraction module comprises numerical data, and the processing pathway configured to process the data set comprising the numerical data comprises a batch normalisation layer configured to apply a normalisation function to standardise the distribution of the numerical data to generate a vector output representative of the data set comprising numerical data.

9. A system according to any previous claim, wherein the data extraction module is configured to tokenise the plurality of data sets and input a corresponding tokenised data set into each of the plurality of processing pathways.

10. A system according to any previous claim, wherein the input document data comprises data associated with an accounts payable document.

11. A system according to claim 10, wherein the predicted classification variables indicative of a property of the input document data generated by the prediction heads comprise at least one of a vendor identifier; a currency prediction, a tax code prediction and a general ledger code prediction.

12. A system according to claim 10 or 11, wherein the accounts payable document is an invoice document.

13. A computer implemented method of predicting a property or classification associated with document data, said method comprising:
receiving input document data;
extracting from the input document data a plurality of data sets, each data set comprising data of one of a plurality of data types;
processing each of the plurality of data sets by one of a plurality of processing pathways, each processing pathway configured to generate a vector output representative of the data set processed by that processing pathway;
concatenating the vector outputs of each processing pathway to generate a concatenated vector, and
processing the concatenated vector by a plurality of predictions heads to generate a plurality of prediction variables, each prediction variable indicative of a property or classification predicted to be associated with the input document data.

14. A computer implemented method according to claim 13, further comprising:
comparing a plurality of feature embeddings with the concatenated vector generated by the vector concatenation layer to generate similarity data indicative of a degree of similarity between the concatenated vector and each feature embedding, each feature embedding corresponding to a vector embedding of one of a plurality of document features;
communicating the similarity data to a further prediction head, and
generating by the further prediction head a further predicted classification variable indicative of a further property of the input document data using the similarity data.

15. A computer implemented method according to claim 14, wherein each feature embedding is in a latent embedding vector space corresponding to a vector space of the concatenated vector.

16. A computer implemented method according to claim 14 or 15, comprising:
generating, by the further prediction head, a further predicted classification variable indicative of a further property of the input document data using the similarity data and the concatenated vector.
